(19) Europäisches Patentamt
European Patent Office
Office européen des brevets

(11) **EP 3 663 108 A1**

(12) **EUROPEAN PATENT APPLICATION**
published in accordance with Art. 153(4) EPC

(43) Date of publication:
**10.06.2020 Bulletin 2020/24**

(51) Int Cl.:
**B60C 15/06** (2006.01)   **C08G 18/75** (2006.01)
**C08L 75/04** (2006.01)   **C08L 101/00** (2006.01)

(21) Application number: **18841070.8**

(22) Date of filing: **14.06.2018**

(86) International application number:
**PCT/JP2018/022747**

(87) International publication number:
**WO 2019/026435 (07.02.2019 Gazette 2019/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2017   JP 2017148471**

(71) Applicant: **Bridgestone Corporation
Tokyo 104-8340 (JP)**

(72) Inventors:
• **KAWASHIMA, Masahiro
  Tokyo 104-8340 (JP)**
• **TSUDA, Shunsuke
  Tokyo 104-8340 (JP)**

(74) Representative: **Lang, Johannes
Bardehle Pagenberg Partnerschaft mbB
Patentanwälte, Rechtsanwälte
Prinzregentenplatz 7
81675 München (DE)**

(54) **PNEUMATIC TYRE**

(57)   An object of the present disclosure is to provide a pneumatic tire which exhibits a superior balance between satisfactory low-hysteresis loss properties and good steering stability. The present disclosure achieves the object by a pneumatic tire having a bead filler (7) in a bead portion (1) thereof, wherein: the bead filler (7) is composed of a thermosetting resin or a thermosetting elastomer having a Young's modulus in the range of 50 MPa to 300 MPa.

FIG. 1

**Description**

TECHNICAL FIELD

The present invention relates to a pneumatic tire.

BACKGROUND ART

A bead core is generally embedded in a bead portion of a pneumatic tire. Further, a bead filler is provided on the outer side in the tire radial direction of the bead core. The bead filler needs to have high rigidity in terms of ensuring satisfactory rigidity of the bead portion. A rubber composition containing a reinforcing filler such as carbon black therein is generally used for the bead filler in this regard in the prior art to ensure high rigidity of the bead filler itself.

On the other hand, PTL 1 mentioned below discloses, as a tire having a bead filler composed of a material other than such a rubber composition as described above, a tire having a bead filler composed of a thermoplastic resin or a thermoplastic elastomer composition. PTL 1 teaches that it is possible, by composing a bead filler of a thermoplastic resin or a thermoplastic elastomer composition, to make rigidity of the bead filler uniform along the entire circumference thereof without deteriorating road noise in the extremely low frequency band even when the bead filler is made compact and lightweight.

CITATION LIST

Patent Literature

PTL 1: JP H09-300924 A

SUMMARY

(Technical Problem)

As described above, a bead filler generally employs a rubber composition containing a reinforcing filler such as carbon black therein to ensure high rigidity of the bead filler itself. However, a bead filler composed of such a rubber composition as described above exhibits large hysteresis loss because of the reinforcing filler contained therein. Large hysteresis loss of the bead filler deteriorates low fuel consumption properties of the tire. Accordingly, a bead filler is preferably small in hysteresis loss (or excellent in "low hysteresis loss properties").

Further, as a result of a keen study by the inventors of the present disclosure, it has been discovered that the bead filler composed of a thermoplastic resin or a thermoplastic elastomer composition of PTL 1, which somehow attains high rigidity thereof, cannot retain satisfactory elastic modulus and exhibits deteriorated steering stability of the tire at high temperature.

In view of this, an object of the present disclosure is to solve the prior art problems described above and provide a pneumatic tire which exhibits a superior balance between satisfactory low-hysteresis loss properties and good steering stability.

(Solution to Problem)

Primary structures of the present disclosure for solving the prior art problems described above are as follows.

A pneumatic tire of the present disclosure has a bead filler in a bead portion thereof, wherein the bead filler is composed of a thermosetting resin or a thermosetting elastomer having a Young's modulus in the range of 50 MPa to 300 MPa.

Such a pneumatic tire as described above of the present disclosure exhibits a superior balance between low-hysteresis loss properties and steering stability.

In the present disclosure, a Young's modulus is measured by a method described below in Examples.

In a preferable example of the pneumatic tire of the present disclosure, the thermosetting resin or the thermosetting elastomer is a thermosetting polyurethane resin or a thermosetting polyurethane elastomer. A bead filler can be easily manufactured at low temperature in this case.

In this regard, the thermosetting polyurethane resin or the thermosetting polyurethane elastomer is preferably a thermosetting polyurethane resin or a thermosetting polyurethane elastomer obtained by reacting a polyisocyanate component containing 1,4-bis(isocyanatomethyl)cyclohexane of which trans-isomer content is 80 mol % or more with an active hydrogen compound component. In this case, it is possible to further suppress deterioration of elastic modulus at high temperature and thus further improve steering stability of the tire.

In the present disclosure, a proportion of the trans-isomer in 1,4-bis(isocyanatomethyl)cyclohexane is determined based on a trans/cis ratio measured by $^{13}$C-NMR

(Advantageous Effect)

According to the present disclosure, it is possible to provide a pneumatic tire which exhibits a superior balance between low-hysteresis loss properties and steering stability.

BRIEF DESCRIPTION OF THE DRAWINGS

In the accompanying drawings, wherein:

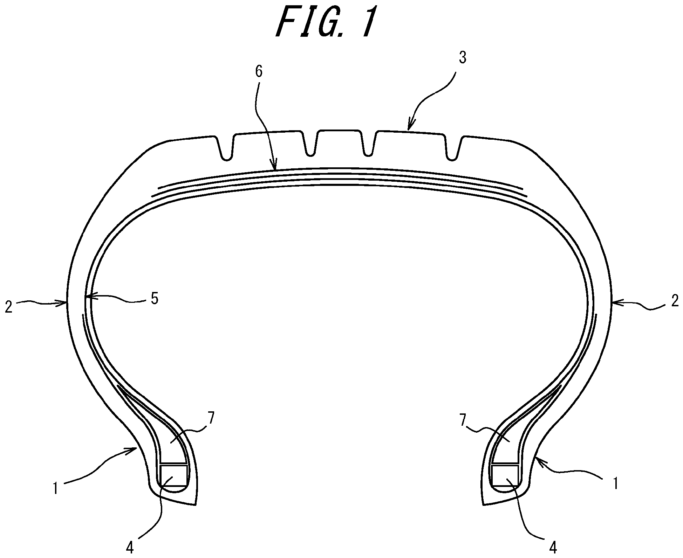

FIG. 1 is a sectional view of an embodiment of a pneumatic tire of the present disclosure.

DETAILED DESCRIPTION

Hereinafter, a pneumatic tire of the present disclosure will be demonstratively described in detail based on embodiments thereof.

FIG. 1 is a sectional view of an embodiment of the pneumatic tire of the present disclosure. The tire shown in FIG. 1 has a pair of bead portions 1, a pair of sidewall portions 2, a tread portion 3, a carcass 5 provided to extend in a toroidal shape across bead cores 4 respectively embedded in the bead portions 1, a belt 6 constituted of two belt layers and provided on the outer side in the tire radial direction of a crown portion of the carcass 5, and a bead filler 7 provided on the outer side in the tire radial direction of each bead core 4.

In the tire demonstratively shown in the drawing, the carcass 5 is constituted of a single carcass ply and includes: a main body portion extending in a toroidal shape across the pair of bead cores 4 respectively embedded in the bead portions 1; and turned-up portions each turned up, around the corresponding bead core 4 from the inner side toward the outer side in the tire widthwise direction, toward the outer side in the radial direction. However, the number and the structures of plies of the carcass 5 of the pneumatic tire of the present disclosure are not limited to those shown in the drawing. Each bead filler 7 is provided on the outer side in the tire radial direction of the corresponding bead core 4 between the main body portion and the turned-up portion of the carcass.

In the tire demonstratively shown in the drawing, the belt 6 is constituted of two belt layers. Each of the belt layers is generally a rubber-coated layer of cords (preferably steel cords) extending to be inclined with respect to the equatorial plane of the tire. The two belt layers are provided in a laminated manner such that the cords of one belt layer intersect the cords of the other belt layer with respect to the tire equatorial plane, thereby collaboratively constituting the belt 6. The number of the belt layers constituting the belt 6 of the pneumatic tire of the present disclosure, however, is not limited to two shown in the drawing. The pneumatic tire of the present disclosure may further include a belt-reinforcing layer which is a rubber-coated layer of cords aligned substantially in parallel to the tire circumferential direction and provided on the outer side in the tire radial direction of the belt 6.

The pneumatic tire of the present disclosure is characterized in that the bead filler 7 provided in the bead portion 1 is composed of a thermosetting resin or a thermosetting elastomer having a Young's modulus in the range of 50 MPa to 300 MPa.

It is possible, by composing the bead filler 7 of a thermosetting resin or a thermosetting elastomer having a Young's modulus in the range of 50 MPa to 300 MPa, to ensure satisfactorily high rigidity of the bead filler 7 and reduce hysteresis loss, i.e. improve low-hysteresis loss properties, of the bead filler 7. Further, the bead filler 7 composed of a thermosetting resin or a thermosetting elastomer does not soften at high temperature and thus can retain satisfactory elastic modulus at high temperature. That is, the bead filler 7 having satisfactorily high rigidity can well avoid a decrease in elastic modulus thereof at high temperature, whereby the pneumatic tire having the bead filler 7, of the present disclosure, is excellent in steering stability.

Accordingly, the pneumatic tire of the present disclosure exhibits a superior balance between low-hysteresis loss properties and steering stability.

The bead filler 7 is composed of a thermosetting resin or a thermosetting elastomer having a Young's modulus in the range of 50 MPa to 300 MPa. A thermosetting resin and a thermosetting elastomer are polymer compounds which are curable by heating. A polymer compound having rubber-like elasticity, of such thermocurable polymer compounds as described above, is referred to as a "thermosetting elastomer" and a polymer compound not having rubber-like elasticity, of the thermocurable polymer compounds, is referred to as a "thermosetting resin" in the present disclosure.

The bead filler 7 may further contain additives generally added to resins and elastomers, such as a heat resistance improver, an ultraviolet absorbing agent, a light stabilizer, an antioxidant, an antistatic agent, a lubricant, a nucleating agent, a tackifier, an antifogging agent, a mold-releasing agent, a filler, a pigment, a dye, a flavoring agent, a flame retardant, and the like. The content of the additives in the bead filler 7 is preferably 10 mass % or less. In other words, the total content of a thermosetting resin and a thermosetting elastomer in the bead filler 7 is preferably 90 mass % or more.

The thermosetting resin/the thermosetting elastomer composing the bead filler 7 has a Young's modulus in the range of 50 MPa to 300 MPa, preferably in the range of 70 MPa to 250 MPa, and more preferably in the range of 85 MPa to 150 MPa. When a Young's modulus of the thermosetting resin/the thermosetting elastomer is less than 50 MPa, rigidity of the bead filler 7 may not be satisfactorily high. When a Young's modulus of the thermosetting resin/the thermosetting elastomer exceeds 300 MPa, riding comfort may deteriorate in a resulting tire.

Examples of the thermosetting resin include polyurethane resin, phenol resin, cresol resin, epoxy resin, melamine resin, and the like. Polyurethane resin is preferable among these examples. Examples of the thermosetting elastomer include thermosetting polyurethane elastomer, silicone rubber, fluororubber, and the like. Thermosetting polyurethane elastomer is preferably among these examples. When the bead filler 7 is formed of a thermosetting polyurethane resin or a thermosetting polyurethane elastomer, the bead filler can be easily manufactured at relatively low temperature because the polyurethane resin and the polyurethane elastomer can be injection-molded at low temperature.

Examples of the thermosetting polyurethane resin and the thermosetting polyurethane elastomer described above include: a thermosetting polyurethane resin and a thermosetting polyurethane elastomer obtained by reacting a polyisocyanate component with an active hydrogen compound component; a thermosetting polyurethane resin and a thermosetting polyurethane elastomer obtained by first synthesizing an urethane prepolymer from a polyisocyanate component and an active hydrogen compound component and then reacting the urethane prepolymer with a chain extender; and the like.

A thermosetting polyurethane resin and a thermosetting polyurethane elastomer, obtained by reacting a polyisocyanate component containing 1,4-bis(isocyanatomethyl)cyclohexane of which trans-isomer content is 80 mol % or more with an active hydrogen compound component, are preferable as the thermosetting polyurethane resin and the thermosetting polyurethane elastomer described above. In this case, it is possible to further suppress deterioration of elastic modulus of the bead filler 7 at high temperature and thus further improve steering stability of the tire. The trans-isomer content of 1,4-bis(isocyanatomethyl)cyclohexane is preferably 85 mol % or more in this regard.

1,4-bis(isocyanatomethyl)cyclohexane described above can be manufactured by using as a raw material 1,4-bis(aminomethyl)cyclohexane of which trans-isomer content is 80 mol % or more according to the phosgene-utilizing method described in JP H07-309827 A, the non-phosgene method described in JP 2004-244349 A, or the like.

The polyisocyanate component of the thermosetting polyurethane resin and the thermosetting polyurethane elastomer may contain polyisocyanate other than 1,4-bis(isocyanatomethyl)cyclohexane of which trans-isomer content is 80 mol % or more described above. Examples of the polyisocyanate other than the 1,4-bis(isocyanatomethyl)cyclohexane include isophorone diisocyanate, 4,4'-methylenebis(cyclohexyl isocyanate), 1,4-cyclohexane diisocyanate, 1,3-bis(isocyanatomethyl)cyclohexane, 2,5(2,6)-bis(isocyanatomethyl)norbornane (NBDI), 1,5-pentamethylenediisocyanate, 1,6-hexamethylenediisocyanate, and the like. Content of 1,4-bis(isocyanatomethyl)cyclohexane of which trans-isomer content is 80 mol % or more in the polyisocyanate component is preferably 50 mass % or more, more preferably 70 mass % or more, further more preferably 90 mass % or more, and may be 100 mass %.

Examples of the active hydrogen compound component include polyol (a compound having at least two hydroxyl groups), polythiol (a compound having at least two mercapto (thiol) groups), polyamine (a compound having at least two amino groups), and the like. Polyol is preferable among these examples.

Examples of the polyol include: a low-molecular weight polyol having a number-average molecular weight of less than 400, such as ethylene glycol, propylene glycol, 1,3-propanediol, 1,4-butylene glycol, 1,3-butylene glycol, 1,2-butylene glycol, 1,5-pentanediol, 1,6-hexanediol, neopentyl glycol, alkane($C_{7-22}$)diol, diethylene glycol, triethylene glycol, dipropylene glycol, 3-methyl-1,5-pentanediol, alkane-1,2-diol ($C_{17-20}$), 1,3(1,4)-cyclohexanedimethanol and a mixture thereof, 1,4-cyclohexanediol, hydrogenated bisphenol A, 1,4-dihydroxy-2-butene, 2,6-dimethyl-1-octene-3,8-diol, bisphenol A, glycerin, trimethylolpropane, pentaerythritol, diglycerin, xylitol, sorbitol, mannitol, allitol, iditol, dulcitol, altritol, inositol, dipentaerythritol, perseitol, sucrose, and the like; a high-molecular weight polyol having a number-average molecular weight equal to or larger than 400, such as polyether polyol, polyester polyol, polycarbonate polyol, polyurethane polyol, epoxy polyol, vegetable oil-based polyol, polyolefin polyol, acryl polyol, vinyl monomer-modified polyol, and the like. Polyether polyol and polyester polyol are preferable among these examples. Polyether polyol can be obtained, for example, by adding alkylene oxide such as ethylene oxide, propylene oxide to polyhydric alcohol such as ethylene glycol, propylene glycol, glycerin or the like. Polyester polyol can be obtained, for example, by reacting polyhydric alcohol such as ethylene glycol, diethylene glycol, 1,4-butanediol, 1,6-hexanediol, propylene glycol, trimethylolethane, trimethylolpropane or the like with polybasic carboxylic acid such as adipic acid, glutaric acid, succinic acid, sebatic acid, pimelic acid, suberic acid or the like.

Examples of the chain extender include polyamine and the like, as well as the low-molecular weight polyols described above. Examples of the polyamine include: alicyclic polyamine such as isophoronediamine, 4,4'-dicyclohexylmethanediamine, 2,5(2,6)-bis(aminomethyl)bicyclo[2.2.1]heptane, 1,4-cyclohexanediamine, 1-amino-3-aminomethyl-3,5,5-trimethylcyclohexane, bis(4-aminocyclohexyl)methane, diaminocyclohexane, 3,9-bis(3-aminopropyl)-2,4,8,10-tetraoxaspiro[5,5]undecane, 1,3-bis(aminomethyl)cyclohexane, 1,4-bis(aminomethyl)cyclohexane, and the like; aliphatic polyamine such as ethylenediamine, propylenediamine, 1,3-propanediamine, 1,4-butanediamine, 1,5-pentanediamine, 1,6-hexamethylenediamine, hydrazine, diethyl enetriamine, triethyl enetetramine, tetraethylenepentamine, 1,2-diaminoethane, 1,2-diaminopropane, 1,3-diaminopentane, and the like.

An urethanization catalyst can be used for a reaction between the polyisocyanate component and the active hydrogen compound component and a reaction between the urethane prepolymer and the chain extender described above. Examples of the urethanization catalyst include an organic tin compound, an organic lead compound, an organic nickel compound, an organic copper compound, an organic bismuth compound, amines, and the like. The urethanization catalyst is added by an amount of preferably 0.1 to 1.5 parts by mass, more preferably 0.3 to 1.0 parts by mass, with respect to 100 parts by mass of the active hydrogen compound component or the chain extender.

A method for manufacturing the bead filler 7 is not particularly restricted. The bead filler 7 can be manufactured, for example, by using the polyisocyanate component and the active hydrogen compound component or the urethane prepolymer and the chain extender and subjecting them to injection molding.

The pneumatic tire of the present disclosure can be manufactured, for example, by either i) subjecting a green tire obtained by the molding process using unvulcanized rubber composition and the bead filler 7, to vulcanization or ii) subjecting a green tire obtained by the molding process using the bead filler 7 and semivulcanized rubber previously prepared by preliminary vulcanization, to primary vulcanization, depending on type of the desired tire.

Types of structural members other than the bead filler 7, of the pneumatic tire of the present disclosure, are not particularly restricted and any known appropriate members can be employed.

Examples of gas with which the pneumatic tire of the present disclosure is to be inflated include inert gas such as nitrogen, argon, helium or the like, as well as ambient air and air of which oxygen partial pressure has been adjusted.

EXAMPLES

The present disclosure will be described further in detail by Examples hereinafter. The present disclosure is not limited by any means to these Examples.

(Comparative Examples 1-2 and Example 1)

A rubber composition was prepared according to the conventional method and a sample bead filler was prepared by using the rubber composition for Comparative Example 1. Sample bead fillers were prepared by using the materials shown in Table 1 through injection molding for Comparative Example 2 and Example 1.

Values of Young's modulus, elastic modulus (G') and loss tangent (tanδ) were measured by the following methods for each of the sample bead fillers thus prepared.

(1) Young's modulus

A Young's modulus (tensile modulus of elasticity) at 23 °C (the room temperature) was measured for the sample bead filler according to JIS K7161.

(2) Elastic modulus (G') and loss tangent (tanδ)

Values of elastic modulus (G') and loss tangent (tanδ) at 23 °C (the room temperature) and at 100 °C were measured, respectively, for the sample bead filler under the conditions of strain: 1%, frequency: 15 Hz by using "ARES" manufactured by TA Instruments.

The loss tangent (tanδ) values thus measured at the respective temperatures were first converted to inverse numbers and then expressed as index values relative to the corresponding inverse numbers of Comp. Example 1 (at 23 °C and 100 °C) which are "100" respectively. The larger index value represents the smaller loss tangent (tanδ), i.e. the better low-hysteresis loss properties.

The elastic modulus (G') values thus measured at the respective temperatures were first converted to logarithms or "Log(elastic modulus)" and then expressed as index values relative to the corresponding Log(elastic modulus) values of Comp. Example 1 (at 23 °C and 100 °C) which are "100" respectively. The larger index value represents the larger elastic modulus (G').

Further, an elastic modulus retention rate (%) was calculated by the following formula.

$$\text{Elastic modulus retention rate} = [\text{elastic modulus (G') at 100 °C}]/[\text{elastic modulus (G') at 23 °C}] \times 100$$

Sample pneumatic tires (size: 245/45R18) each having the structure shown in FIG. 1 were prepared by first molding green tires by using the sample bead fillers obtained as described above and then subjecting the green tires to vulcanization. The sample pneumatic tires used the structural members of the same types, except that the materials applied to the sample bead fillers differed therebetween.

Coating rubber of the carcass adjacent to the sample bead filler used a rubber composition obtained by blending 80 parts by mass of natural rubber (TSR20), 20 parts by mass of styrene-butadiene copolymer rubber (styrene content: 25 mass %, manufactured by JSR Corporation), 40 parts by mass of HAF grade carbon black, 1 part by mass of stearic acid, 1 part by mass of antioxidant 6C (N-(1,3-dimethylbutyl)-N'-phenyl-p-phenylenediamine, product name "Nocrac 6C" manufactured by Ouchi-Shinko Chemical Industrial Co., Ltd.), 4 parts by mass of zinc white, 1 part by mass of vulcanization accelerator DM (dibenzothiazyl disulfide, product name "Nocceler DM" manufactured by Ouchi-Shinko Chemical Industrial Co., Ltd.), and 2.5 parts by mass of sulfur.

Further, surfaces of each sample bead filler were preliminarily coated with a resorcinol formaldehyde latex (RFL) adhesive in preparation of the sample pneumatic tire, so that good adhesion between the sample bead filler and the carcass as the adjacent member was ensured. Adhesion properties of the sample bead filler with respect to the adjacent member (the carcass) were evaluated in this regard.

In Table 1, "Good" represents that the adhesion properties of the sample bead filler with respect to the adjacent member (the carcass) was satisfactory and "Poor" represents that the adhesion properties of the sample bead filler with respect to the adjacent member (the carcass) was unsatisfactory.

Each of the sample pneumatic tires thus prepared was mounted on an actual vehicle. Then, for the sample pneumatic tire, vertical rigidity/stiffness and lateral rigidity/stiffness were measured for evaluation of steering stability thereof and low fuel consumption properties thereof were also evaluated by the following methods. For Comp. Example 2, the adhesion properties between the sample bead filler and the adjacent member (carcass) was so poor that a sample tire thereof could not be prepared, whereby no test using an actual vehicle was carried out therein.

(3) Vertical rigidity and lateral rigidity

A value of vertical rigidity of each pneumatic sample tire was obtained by: inflating the tire at air pressure of 230 kPa; measuring a magnitude of displacement of the center axis of the tire when vertical load of 5.1 kN was applied to the tire with the center axis thereof set to be horizonal; calculating the inverse number of the magnitude of displacement thus measured and converting the inverse number to an index relative to the corresponding inverse number of Comp. 1 being "100"; and regarding the index as a vertical rigidity value. Similarly, a value of lateral rigidity of the sample pneumatic tire was obtained by: inflating the tire at air pressure of 230 kPa with the center axis thereof set to be horizonal; measuring a magnitude of displacement of the center axis of the tire when load in the axial direction of 5.1 kN was applied to the tire under the vertical load of 5.1 kN; calculating the inverse number of the magnitude of displacement thus measured and converting the inverse number to an index relative to the corresponding inverse number of Comp. 1 being "100"; and regarding the index as a lateral rigidity value. The larger index value represents the smaller magnitude of displacement (i.e. the higher rigidity) and thus the better steering stability.

(4) Low fuel consumption properties

A value of low fuel consumption properties was obtained by: assembling each sample tire with a rim and inflating the tire at the internal pressure of 250 kPa; measuring rolling resistance of the tire by rotating the tire at velocity of 80 km/hour by a drum tester; calculating the inverse number of the rolling resistance thus measured and converting the inverse number to an index relative to the corresponding inverse number of Comp. 1 being "100"; and regarding the index as a value of low fuel consumption properties. The larger index value represents the smaller rolling resistance and thus the better low fuel consumption properties.

[Table 1]

| | | | Comp. Example 1 | Comp. Example 2 | Example 1 |
|---|---|---|---|---|---|
| Material of bead filler | | - | Rubber composition *1 | Thermoplastic polyurethane elastomer *2 | Thermosetting polyurethane elastomer *3 |
| Physical properties | Young's modulus at 23°C | MPa | 125 | 110 | 132 |
| | Elastic modulus (G') at 23°C | Index | 100 | 86 | 102 |
| | tanδ at 23°C | Index | 100 | 262 | 211 |
| | Elastic modulus (G') at 100°C | Index | 100 | 81 | 101 |
| | tanδ at 1000°C | Index | 100 | 61 | 260 |
| | Elastic modulus retention rate | % | 95 | 89 | 93 |
| Adhesion properties with respect to adjacent member | | - | Good | Poor | Good |
| Steering stability | Vertical rigidity | Index | 100 | - | 99 |
| | Lateral rigidity | Index | 100 | - | 101 |
| Low fuel consumption properties | | Index | 100 | - | 103 |

*1 Rubber composition obtained by blending: 80 parts by mass of natural rubber (TSR20); 20 parts by mass of isoprene rubber (manufactured by JSR Corporation, product name "IR2200"); 70 parts by mass of carbon black (manufactured by Asahi Carbon Co., Ltd., product name "Asahi #70"); 20 parts by mass of phenol resin (manufactured by Sumitomo Bakelite Co., Ltd., product name "SUMILITERESIN PR50235"); 2 parts by mass of stearic acid, 1 part by mass of antioxidant 6C (N-(1,3-dimethylbutyl)-N'-phenyl-p-phenylenediamine, product name "Nocrac 6C" manufactured by Ouchi-Shinko Chemical Industrial Co., Ltd.); 4 parts by mass of zinc white; 2.5 part by mass of vulcanization accelerator DM (dibenzothiazyl disulfide, product name "Nocceler DM" manufactured by Ouchi-Shinko Chemical Industrial Co., Ltd.); and 4 parts by mass of sulfur.

*2 Thermoplastic polyurethane elastomer: Product name "Elastollan ET870-11V' manufactured BASF SE, JIS hardness 71A *3 Thermosetting polyurethane elastomer: Thermosetting polyurethane elastomer having JIS hardness 60D and obtained by reacting product name "FORTIMO" manufactured by Mitsui Chemicals, Inc. as 1,4-bis(isocyanatomethyl) cyclohexane of which trans-isomer content is 80 mol % (the polyisocyanate component), with a polyol having a content of primary hydroxyl group at a molecular terminal of $\geq$ 40 mol % (the active hydrogen compound component).

It is understood from Table 1 that the Example tire according to the present disclosure exhibits a superior balance between low-hysteresis loss properties.

REFERENCE SIGNS LIST

1    Bead portion
2    Sidewall portion
3    Tread portion
4    Bead core
5    Carcass
6    Belt
7    Bead filler

**Claims**

1. A pneumatic tire having a bead filler in a bead portion thereof, wherein:
   the bead filler is composed of a thermosetting resin or a thermosetting elastomer having a Young's modulus in the range of 50 MPa to 300 MPa.

2. The pneumatic tire of claim 1, wherein the thermosetting resin or the thermosetting elastomer is a thermosetting polyurethane resin or a thermosetting polyurethane elastomer.

3. The pneumatic tire of claim 2, wherein the thermosetting polyurethane resin or the thermosetting polyurethane elastomer is a thermosetting polyurethane resin or a thermosetting polyurethane elastomer obtained by reacting a polyisocyanate component containing 1,4-bis(isocyanatomethyl)cyclohexane of which trans-isomer content is 80 mol % or more with an active hydrogen compound component.

# FIG. 1

## INTERNATIONAL SEARCH REPORT

| International application No. |
| --- |
| PCT/JP2018/022747 |

**A. CLASSIFICATION OF SUBJECT MATTER**
Int.Cl. B60C15/06(2006.01)i, C08G18/75(2006.01)i, C08L75/04(2006.01)i, C08L101/00(2006.01)i

According to International Patent Classification (IPC) or to both national classification and IPC

**B. FIELDS SEARCHED**

Minimum documentation searched (classification system followed by classification symbols)
Int.Cl. B60C1/00-B60C19/12, C08G18/00-C08G18/87, C08K3/00-13/08, C08L1/00-C08L101/14

Documentation searched other than minimum documentation to the extent that such documents are included in the fields searched
Published examined utility model applications of Japan 1922-1996
Published unexamined utility model applications of Japan 1971-2018
Registered utility model specifications of Japan 1996-2018
Published registered utility model applications of Japan 1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2011-105171 A (BRIDGESTONE CORPORATION) 02 June 2011, claims, paragraphs [0035], [0046], drawings (Family: none) | 1<br>2-3 |
| X<br>A | Microfilm of the specification and drawings annexed to the request of Japanese Utility Model Application No. 137632/1982 (Laid-open No. 42705/1984) (BRIDGESTONE CORP.) 21 March 1984, claims, specification, page 8, line 11 to page 9, line 10, drawings (Family: none) | 1<br>2-3 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03.09.2018 | 11.09.2018 |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**INTERNATIONAL SEARCH REPORT**

| International application No. |
|---|
| PCT/JP2018/022747 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 9-300924 A (YOKOHAMA RUBBER CO., LTD.) 25 November 1997, whole document (Family: none) | 1-3 |

Form PCT/ISA/210 (continuation of second sheet) (January 2015)

**EP 3 663 108 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09300924 A
- JP H07309827 A
- JP 2004244349 A